(19) Europäisches Patentamt

European Patent Office

Office européen des brevets

(11) EP 0 604 247 B1

## (12) FASCICULE DE BREVET EUROPEEN

(45) Date de publication et mention de la délivrance du brevet:
**07.02.1996 Bulletin 1996/06**

(51) Int. Cl.⁶: **B23K 37/04**, B23K 26/00

(21) Numéro de dépôt: 93402805.1

(22) Date de dépôt: 18.11.1993

(54) **Procédé de soudage bord à bord d'au moins deux tôles**

Stumpfschweissverfahren von mindestens zwei Blechen

Butt welding method of at least two plates

(84) Etats contractants désignés:
**AT BE CH DE DK ES FR GB GR IT LI LU NL PT SE**

(30) Priorité: **24.12.1992 FR 9215733**

(43) Date de publication de la demande:
**29.06.1994 Bulletin 1994/26**

(73) Titulaire: **SOLLAC**
**F-92800 Puteaux (FR)**

(72) Inventeur: **Peru, Gilles**
**F-59240 Dunkerque (FR)**

(74) Mandataire: **Lanceplaine, Jean-Claude et al**
**F-75441 Paris Cédex 09 (FR)**

(56) Documents cités:
**EP-A- 0 211 970**         **EP-A- 0 482 223**
**EP-A- 0 549 389**         **DE-C- 4 100 302**

EP 0 604 247 B1

## Description

La présente invention a pour objet un procédé de soudage bord à bord d'au moins deux tôles, par exemple au moyen d'un faisceau laser.

Le soudage bord à bord de tôles au moyen d'un faisceau laser réalisé sans métal d'apport demande de très hautes exigences de précision, de forme et de position des tôles à souder.

En effet, la qualité du joint à souder dépend en partie de la précision dans la position des tôles et dans la qualité du contact au niveau du plan de joint entre lesdites tôles.

Si la qualité du contact au niveau du plan de joint entre les tôles est incorrecte, c'est à dire si le jeu est trop important, il arrive que le joint soudé présente un effondrement, voire même des trous, le joint soudé n'étant pas continu dans ce cas.

Pour assurer un jeu minimal au niveau du plan de joint des tôles afin d'obtenir une bonne qualité du joint soudé, on peut améliorer la qualité du cisaillage des tôles afin de limiter les ondulations des arêtes de coupe et d'assurer un meilleur contact des tôles entre elles pour mieux maîtriser ce jeu entre lesdites tôles.

Mais, pour obtenir un tel résultat, il est nécessaire d'investir dans des cisailles très précises, de coût important ou d'utiliser des cisailles doubles permettant de couper simultanément avec la même lame, les deux flans de tôle à rabouter.

On peut également exercer une pression latérale sur les tôles, dirigée vers le plan de joint desdites tôles afin d'écraser les crêtes des ondulations des arêtes de coupe des bords à souder.

Cette dernière solution est de plus en plus utilisée dans les installations industrielles de soudage au moyen d'un faisceau laser.

Pour exercer cette pression latérale sur les tôles à souder, on connaît des installations de soudage qui comportent des rouleaux latéraux à axes verticaux.

Ces rouleaux exercent sur le bord libre de chaque tôle, opposé au bord en contact avec l'autre tôle, la pression latérale nécessaire à la minimisation du jeu au niveau du plan de joint desdites tôles.

Mais, une telle installation est compliquée à réaliser et nécessite des réglages très précis et très complexes.

De plus, à chaque changement de séquence de fabrication, il est nécessaire de déplacer les rouleaux en fonction de la taille des tôles à souder.

D'autre part, compte tenu des tolérances sur les cotes des tôles à souder, il est courant que les rouleaux n'exercent plus leur fonction ou au contraire qu'ils exercent sur les tôles une pression trop importante pouvant entraîner un flambement de celles-ci et, dans ce cas un recouvrement des deux tôles au niveau du plan de joint.

L'invention a pour but de proposer un procédé de soudage bord à bord d'au moins deux tôles permettant d'exercer sur lesdites tôles un effort latéral suffisant à écraser les crêtes des ondulations des arêtes de coupe des bords à souder, tout en s'affranchissant des inconvénients précitées.

L'invention a donc pour objet un procédé de soudage bord à bord d'au moins deux tôles selon la revendication 1.

Selon d'autres caractéristiques de l'invention:

- le rapport entre la pression de contact vertical et la pression de contact horizontal est compris entre 0,010 et 0,015,
- la pression de contact horizontal est supérieure à $10 N/mm^2$,
- la pression de contact horizontal est comprise entre 0,05 fois la limite élastique de la tôle ayant la plus faible limite élastique et la pression de flambement de la tôle ayant la pression de flambement la plus faible,
- ledit élément est formé par au moins un desdits moyens de bridage des tôles.

Les caractéristiques et avantages de l'invention apparaîtront au cours de la description qui va suivre, donnée uniquement à titre d'exemple et faite en référence aux dessins annexés, dans lesquels :

- la Fig. 1 est une vue schématique en perspective de deux tôles à souder bord à bord en utilisant le procédé selon l'invention,
- la Fig. 2 est une vue schématique en coupe d'un exemple de réalisation d'un dispositif pour la mise en oeuvre du procédé selon l'invention.

L'invention concerne un procédé de soudage bord à bord d'au moins deux tôles 1 et 2 dans lequel on amène les tôles 1 et 2 en contact au niveau de leurs bords 3 et 4 à souder, on maintient en position lesdites tôles 1 et 2 par des moyens de bridage et on réalise un joint soudé au niveau du plan de joint 5 par fusion locale desdites tôles 1 et 2, par exemple au moyen d'un faisceau laser.

Selon l'invention, on exerce sur au moins un élément 6, par exemple un mors de serrage, en contact avec au moins une des faces principales d'au moins une desdites tôles, un effort latéral Py en direction du bord à souder 3 ou 4 de ladite tôle 1 ou 2 et un effort vertical Pz, et on détermine la surface de contact S1 dudit élément 6 avec ladite face principale de ladite tôle et l'effort vertical Pz pour que le rapport entre la pression de contact vertical Pcz entre ledit élément 6 et ladite tôle 1 ou 2 et la pression de contact horizontal Pcy au niveau du plan de joint 5 desdites tôles 1 et 2 soit compris entre 0,007 et 0,020, de préférence compris entre 0,010 et 0,015.

L'effort latéral Py exercé sur l'élément 6 est déterminé pour que la pression de contact horizontal Pcy soit supérieure à $10 N/mm^2$, de préférence supérieure à 0,05 fois la limite élastique Re de la tôle 1 ou 2 ayant la plus faible limite élastique.

Si le rapport entre la pression de contact vertical et la pression de contact horizontal Pcz/Pcy est inférieur à 0,007, la pression de contact entre l'élément 6 et par exemple la tôle 2, n'est pas suffisante pour que l'effort latéral Py exercé sur ledit élément 6 soit transmis au plan de joint 5 des deux tôles 1 et 2.

En revanche, si le rapport entre la pression de contact vertical et la pression de contact horizontal Pcz/Pcy est supérieur à 0,020, l'effort vertical exercé est trop important et les risques de dégrader l'état de surface de la tôle 2 sont très grands.

De plus, la dégradation de l'état de la surface de la ou des tôles due à son écrasement induit des contraintes au niveau du plan de joint 5 qui risque de s'ouvrir, annulant ainsi l'effet de la pression de contact horizontal Pcy.

L'élément 6 peut être formé par au moins un des moyens de bridage des tôles 1 et 2.

Dans un premier temps, on détermine la valeur de la pression de contact horizontal Pcy, cette pression devant être comprise entre 0,05 fois la limite élastique Re de la tôle 1 ou 2 ayant la plus faible limite élastique et la pression de flambement Pf de la tôle 1 ou 2 ayant la pression de flambement la plus faible, sans être inférieure à 10 N/mm². 

Si, la pression de contact horizontal Pcy au niveau du plan de joint 5 des tôles 1 et 2 est inférieure à 10 N/mm2, les ondulations issues de la découpe des bords à souder 3 et 4 des tôles 1 et 2 ne s'écrasent pas et le jeu est trop important pour réaliser le soudage sans métal d'apport.

Si la pression de contact horizontal Pcy au niveau du plan de joint 5 des tôles 1 et 2 est comprise entre 10 N/mm² et 0,05 Re, le contact entre les tôles 1 et 2 n'est pas de qualité suffisante, car les ondulations issues de la découpe des bords à souder 3 et 4 des tôles 1 et 2 ne s'écrasent pas suffisamment

De plus, si la pression de contact horizontal Pcy est supérieure à Pf, il risque de se produire un flambement d'au moins la tôle ayant la pression de flambement la plus faible.

Dans un second temps, on détermine la valeur de la pression verticale Pcz pour que :

$$0,007 \, Pcy < Pcz < 0,02 \, Pcy$$

Ensuite, on détermine à partir de la pression de contact vertical Pcz la surface de contact S1 de l'élément 6 avec la tôle et l'effort vertical Pz à exercer sur ledit élément 6 pour que l'effort latéral Py soit transmis au plan de joint des tôles 1 et 2, l'ensemble élément 6-tôle 2 se comportant comme un élément unique solidaire.

Ainsi par exemple dans le cas du soudage laser bord à bord de deux tôles d'épaisseur de 1mm, de longueur à souder égale à 1m et réalisées en acier standard bas carbone de limite élastique Re = 200 N/mm², le procédé selon l'invention est mis en oeuvre de la façon suivante :

- on détermine la pression de contact horizontal Pcy sachant que Pcy > 10N/mm² et est de préférence compris entre 0,05 Re et Pf :
  Par exemple Pcy = 35 N/mm²

- on calcule la pression horizontale à appliquer sur l'élément 6 :

$$Py = S_2 \times Pcy = 10000 \times 1 \times 35 \, N$$

$$Py = 35000 \, daN$$

- on détermine la pression de contact vertical Pcz pour que l'effort horizontal soit correctement transmis au plan de joint par l'intermédiaire de l'élément 6 :

$$0,007 \times 35 < Pcz < 0,02 \times 35$$

soit

$$0,25 < Pcz < 0,7 \, N/mm^2$$

de préférence

$$0,01 \times 35 < Pcz < 0,015 \times 35$$

soit

$$0,35 < Pcz < 0,53 \, N/mm^2$$

- on détermine S1 et l'effort latéral Py selon les conditions mécaniques de la machine de soudage.

Par exemple, si l'élément 6 est un élément rectangulaire de longueur égale à 1000mm et de largeur égal à 200mm, il faut exercer sur l'élément 6 un effort vertical Py compris entre 1000 x 200 x 0,35 N et 1000 x 200 x 0,53 N, soit compris entre 70000 daN et 106000 daN pour assurer la transmission complète de l'effort horizontal Py de l'élément 6 au plan de joint 5 des deux tôles à souder.

Dans le cas des installations de soudage dites statiques, dans lesquelles les tôles 1 et 2 sont mises en place et restent fixes pendant qu'une tête de faisceau laser se déplace pour réaliser le joint soudé, les tôles 1 et 2 sont posées sur un plan de référence fixe, l'une d'elle étant en butée latérale contre un élément de mise en référence latérale.

Dans ce cas, il suffit d'un seul élément 6 par exemple en contact avec la face supérieure de la tôle qui n'est pas en butée latérale, pour assurer le positionnement et le maintien en référence du plan de joint 5 des tôles 1 et 2.

Dans le cas des installations de soudage dites continues, dans lesquelles la tête du faisceau laser est fixe et les tôles 1 et 2 se déplacent sous ledit faisceau laser, le dispositif comporte quatre éléments 6 en contact de chaque tôle 1 et 2, l'un avec la face supérieure et l'autre avec la face inférieure de la tôle correspondante.

Les éléments 6 assurent le positionnement des tôles 1 et 2 et leur transfert vers le faisceau laser.

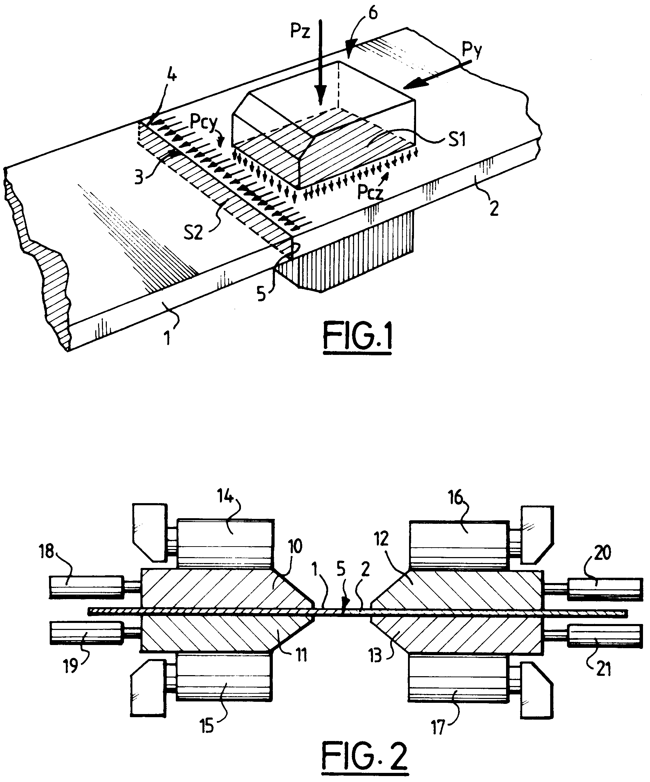

Dans l'exemple de réalisation d'un dispositif pour la mise en oeuvre du procédé selon l'invention, représenté à la Fig. 2, chaque tôle 1 et 2 à souder est maintenue au moyen de patins 10, 11, 12 et 13.

Au moins un patin 10 est en contact avec la face supérieure de la tôle 1 et au moins un patin 11 est en contact avec la face inférieure de ladite tôle 1.

D'autre part, au moins un patin 12 est en contact avec la face supérieure de la tôle 2 et au moins un patin est en contact avec la face inférieure de ladite tôle 2.

La mise en pression verticale des patins 10, 11, 12 et 13 est réalisée par des rouleaux d'appui respectivement 14, 15, 16 et 17.

La mise en pression latérale des tôles 1 et 2 est réalisée par des vérins, respectivement 18, 19, 20 et 21 qui agissent sur les patins, respectivement 10, 11, 12 et 13.

Le procédé selon l'invention permet d'assurer un jeu minimal entre les tôles à souder en exerçant un effort latéral sur celles-ci par l'intermédiaire d'au moins un élément en contact avec au moins une des faces principales d'au moins une desdites tôles et de ce fait d'éviter l'ouverture du joint soudé après soudage desdites tôles, l'ensemble élément de contact-tôle se comportant comme un élément unique solidaire.

**Revendications**

1. Procédé de soudage bord à bord d'au moins deux tôles (1, 2), dans lequel on amène les tôles (1, 2) en contact au niveau de leurs bords (3, 4) à souder, on exerce un effort latéral Py en direction du bord à souder (3, 4) de ladite tôle (1, 2) pour écraser les crêtes des ondulations des arêtes de coupe des bords à souder (3, 4), on maintient en position lesdites tôles (1, 2) par des moyens de bridage et on réalise un joint soudé au niveau du plan de joint (5) par fusion locale desdites tôles (1, 2), caractérisé en ce que l'on exerce l'effort latéral Py en direction du bord à souder (3, 4) de ladite tôle (1, 2) et un effort vertical Pz sur au moins un élément (6) en contact avec au moins une des faces principales d'au moins une desdites tôles (1, 2), et on détermine la surface de contact S1 dudit élément (6) avec ladite surface principale de ladite tôle (1, 2) et la valeur de l'effort vertical Pz, pour que le rapport entre la pression de contact vertical Pcz entre ledit élément (6) et ladite tôle (1, 2) et la pression de contact horizontal Pcy au niveau du plan de joint (5) desdites tôles (1, 2) soit compris entre 0,007 et 0,020.

2. Procédé selon la revendication 1, caractérisé en ce que le rapport entre la pression de contact vertical Pcz et la pression de contact horizontal Pcy est compris entre 0,010 et 0,015.

3. Procédé selon la revendication 1, caractérisé en ce que la pression de contact horizontal Pcy est supérieure à 10 N/mm2.

4. Procédé selon la revendication 1, caractérisé en ce que la pression de contact horizontal Pcy est comprise entre 0,05 fois la limite élastique Re de la tôle (1, 2) ayant la plus faible limite élastique et la pression de flambement Pf de la tôle (1,2) ayant la pression de flambement la plus faible.

5. Procédé selon la revendication 1, caractérisé en ce que ledit élément (6) est formé par au moins un des moyens de bridage des tôles (1, 2).

**Claims**

1. A method for butt welding at least two sheets (1, 2), wherein the sheets (1, 2) are brought into contact at the level of their edges (3, 4) to be welded, a lateral force Py is exerted in the direction towards the edge (3, 4) to be welded of the said sheet (1, 2) to as to crush the ridges of the drag lines of the cut edges of the edges (3, 4) to be welded, the said sheets (1, 2) are kept in position by clamping means, and a welded joint is made at the level of the joint plane (5) by local fusion of the said sheets (1, 2), characterized in that one exerts the lateral force Py in the direction towards the edge (3, 4) to be welded of the said sheet (1, 2) and a vertical force Pz on at least one element (6) in contact with at least one of the main sides of at least one of the said sheets (1, 2), and one determines the surface S1 of contact of the said element (6) with the said main surface of the said sheet (1, 2) and the value of the vertical force Pz, so that the ratio of the vertical contact pressure Pcz between the said element (6) and the said sheet (1, 2) and the horizontal contact pressure Pcy at the level of the joint plane (5) of the said sheets (1, 2) should be comprised between 0.007 and 0.020.

2. A method according to claim 1, characterized in that the ratio between the vertical contact pressure Pcz and the horizontal contact pressure Pcy is comprised between 0.010 and 0.015.

3. A method according to claim 1, characterized in that the horizontal contact pressure Pcy is greater than 10 N/mm2.

4. A method according to claim 1, characterized in that the horizontal contact pressure Pcy is comprised between 0.05 times the elastic limit Re of the sheet (1, 2) having the lower elastic limit and the buckling pressure Pf of the sheet (1, 2) having the lower buckling pressure.

5. A method according to claim 1, characterized in that the said element (6) is formed by at least one of the means for clamping the sheets (1, 2).

**Patentansprüche**

1. Verfahren zur Stumpfnahtschweißung von zumindest zwei Blechen (1, 2), bei dem die Bleche (1, 2) im Bereich ihrer zu verschweißenden Ränder (3, 4) in Berührung gebracht werden, ein seitlicher Druck $P_y$ in die Richtung des zu verschweißenden Randes (3, 4) des Bleches (1, 2) ausgeübt wird, um die Spitzen der Wellen der Schnittkanten der zu verschweißenden Ränder (3, 4) einzudrücken, die Bleche (1, 2) durch Flanschmittel in Position gehalten werden und eine Schweißverbindung im Bereich der Stoßfläche (5) durch lokales Schmelzen dieser Bleche (1, 2) durchgeführt wird, dadurch gekennzeichnet, daß der seitliche Druck $P_y$ in Richtung des zu verschweißenden Randes (3, 4) des Bleche (1, 2) und ein vertikaler Druck $P_z$ auf zumindest ein Element (6) ausgeübt wird, das mit zumindest einer der Hauptseiten von zumindest einem der Bleche (1, 2) in Berührung steht, und die Berührungsfläche S1 des Elements (6) mit der Hauptfläche des Blechs (1, 2) und der Wert des Vertikaldrucks $P_z$ dermaßen bestimmt werden, daß das verhältnis zwischen dem vertikalen Berührungsdruck $P_{cz}$ zwischen dem Element (6) und dem Blech (1, 2) und dem horizontalen Berührungsdruck $P_{cy}$ im Bereich der Stoßfläche (5) der Bleche (1, 2) zwischen 0,007 und 0,020 liegt.

2. Verfahren nach Anspruch 1, dadurch gekennzeichnet, daß das Verhältnis zwischen dem vertikalen Berührungsdruck $P_{cz}$ und dem horizontalen Berührungsdruck $P_{cy}$ zwischen 0,010 und 0,015 liegt.

3. Verfahren nach Anspruch 1, dadurch gekennzeichnet, daß der horizontale Berührungsdruck $P_{cy}$ größer ist als 10 N/mm$^2$.

4. Verfahren nach Anspruch 1, dadurch gekennzeichnet, daß der horizontale Berührungsdruck $P_{cy}$ zwischen 0,05 mal die Elastizitätsgrenze $R_e$ des Blechs (1, 2) mit der niedrigsten Elastizitätsgrenze und dem knickdruck $P_f$ des Blechs (1, 2) mit dem geringsten Knickdruck liegt.

5. Verfahren nach Anspruch 1, dadurch gekennzeichnet, daß das Element (6) von zumindest einem der Flanschmittel der Bleche (1, 2) gebildet wird.

FIG.1

FIG. 2

6